# EUROPEAN PATENT APPLICATION

(11) **EP 4 683 165 A1**
(43) Date of publication of application: **21.01.2026**
(21) Application number: 25190309.2
(22) Date of filing: 17.07.2025
(51) Int. Cl.: H02J 7/00, H01M 10/625, H01M 10/44, H01M 10/613, H01M 10/615, H01M 10/63, H01M 10/6556, H01M 10/6568, H01M 10/667

(54) **LIQUID-COOLING TEMPERATURE CONTROL METHOD, INTEGRATED STORAGE AND CHARGING DEVICE, AND COMPUTER-READABLE STORAGE MEDIUM**

(30) Priority: 18.07.2024 CN 202410965534
(71) Applicant: Shanghai Sunnic New Energy Technology Co., Ltd, Shanghai 200082 (CN)
(72) Inventor: Zhang, Xu, Shanghai, 200082 (CN); Kong, Jian, Shanghai, 200082 (CN); Wang, Minghui, Shanghai, 200082 (CN); Hu, Jiangwen, Shanghai, 200082 (CN); Ma, Wei, Shanghai, 200082 (CN); Liu, Xintian, Shanghai, 200082 (CN)
(74) Representative: KLIMENT & HENHAPEL

(57) **Abstract**

The present disclosure provides a liquid-cooling temperature control method, an integrated storage and charging device, and a computer-readable storage medium. A specific implementation of the method includes: when the energy storage battery has a heating demand, if the energy storage battery is in the charging state, controlling heat generated by the bidirectional ACDC to heat the energy storage battery; when the energy storage battery has the heating demand, if the energy storage battery is in the discharging state, controlling heat generated by the DCDC and the charging cable to heat the energy storage battery. This method can mitigate energy waste.

## Description

### Technical Field

The present disclosure relates to the technical field of energy control, in particular to a liquid-cooling temperature control method, an integrated storage and charging device, and a computer-readable storage medium.

### Background Art

With the rapid development of high-rate batteries, various problems have emerged in equipment installed with high-rate batteries.

In some application scenarios, the temperature of each component in the equipment may be controlled by means of liquid cooling. If the equipment is a charging pile, when its energy storage battery is in a charging state, the liquid-cooled bidirectional ACDC (bidirectional AC/DC converter, which is a power electronic device that can convert alternating current into direct current, and can also invert direct current into alternating current) will generate heat during operation, thus requiring heat dissipation for the bidirectional ACDC. When the energy storage battery is in a discharging state, the DCDC (direct current to direct current converter) and the charging cable will generate heat during operation, thus requiring heat dissipation for the DCDC and the charging cable.

However, in related art, the heat generated by relevant components in the equipment is not reasonably utilized, resulting in the problem of energy waste.

### Summary

The objective of the embodiments of the present disclosure is to provide a liquid-cooling temperature control method, an integrated storage and charging device, and a computer-readable storage medium to mitigate energy waste.

In a first aspect, an embodiment of the present disclosure provides a liquid-cooling temperature control method, which is applicable to an integrated storage and charging device, where a bidirectional ACDC operates when an energy storage battery of the integrated storage and charging device is in a charging state, and a DCDC and a charging cable operate when the energy storage battery is in a discharging state. The method includes: when the energy storage battery has a heating demand, if the energy storage battery is in the charging state, controlling heat generated by the bidirectional ACDC to heat the energy storage battery; when the energy storage battery has the heating demand, if the energy storage battery is in the discharging state, controlling heat generated by the DCDC and the charging cable to heat the energy storage battery. In this way, the heat generated by the bidirectional ACDC, the DCDC and the charging cable is reasonably utilized. In addition, due to the reasonable utilization of the heat generated by the bidirectional ACDC, the DCDC and the charging cable, there is no need to additionally use other heating components to provide heat for the energy storage battery, and no need to additionally use other heat dissipation components to dissipate heat for the bidirectional ACDC, the DCDC and the charging cable, thereby improving the situation of energy waste.

Optionally, controlling the heat generated by the bidirectional ACDC to heat the energy storage battery includes: controlling to establish communication of a first liquid cooling pipeline between the bidirectional ACDC and the energy storage battery, and disconnecting a second liquid cooling pipeline between the DCDC, the charging cable and the energy storage battery, thereby heating the energy storage battery through liquid coolant in the first liquid cooling pipeline; determining whether a heating demand of the energy storage battery is greater than heat generated by the bidirectional ACDC according to a flow rate of the liquid coolant in the first liquid cooling pipeline; if the heating demand of the energy storage battery is greater than the heat generated by the bidirectional ACDC, controlling a heater to heat, and controlling the heat generated by the bidirectional ACDC and heat generated by the heater to heat the energy storage battery; if the heating demand of the energy storage battery is not greater than the heat generated by the bidirectional ACDC, controlling the heater to stop heating, and controlling the heat generated by the bidirectional ACDC to heat the energy storage battery. In this way, whether to activate the heater can be determined according to the heating demand of the energy storage battery and the heat generated by the bidirectional ACDC, so that the energy storage battery can be charged at an appropriate temperature. Furthermore, the heater remains deactivated when the heat generated by the bidirectional ACDC can meet the heating demand of the energy storage battery, and is activated only when the heating demand of the energy storage battery is not met, thereby the relevant energy of the heater is saved.

Optionally, determining whether a heating demand of the energy storage battery is greater than heat generated by the bidirectional ACDC according to a flow rate of the liquid coolant in the first liquid cooling pipeline includes: if the flow rate of the liquid coolant in the first liquid cooling pipeline reaches a preset flow rate threshold, determining whether the heating demand of the energy storage battery is greater than the heat generated by the bidirectional ACDC after flowing for a preset period according to the flow rate of the liquid coolant. In this way, whether the heat generated by the bidirectional ACDC can meet the heating demand of the energy storage battery can be determined according to the flow rate of the liquid coolant, thereby determining whether it is necessary to activate the heater to heat the energy storage battery.

Optionally, controlling heat generated by the DCDC and the charging cable to heat the energy storage battery includes: controlling to establish communication of the second liquid cooling pipeline between the DCDC, the charging cable and the energy storage battery, and disconnecting the first liquid cooling pipeline between the bidirectional ACDC and the energy storage battery, thereby heating the energy storage battery through the liquid coolant in the second liquid cooling pipeline; determining whether the heating demand of the energy storage battery is greater than the total heat generated by the DCDC and the charging cable according to the flow rate of the liquid coolant in the second liquid cooling pipeline; if the heating demand of the energy storage battery is greater than the total heat generated by the DCDC and the charging cable, controlling a heater to heat, and controlling the total heat and the heat generated by the heater to heat the energy storage battery; if the heating demand of the energy storage battery is not greater than the total heat, controlling the heater to stop heating, and using the total heat to heat the energy storage battery. In this way, whether to activate the heater can be determined according to the heating demand of the energy storage battery and the heat generated by the DCDC and the charging cable, so that the energy storage battery can be discharged at an appropriate temperature. Furthermore, the heater remains deactivated when the heat generated by the DCDC and the charging cable can meet the heating demand of the energy storage battery, and is activated only when the heating demand of the energy storage battery is not met, thereby the relevant energy of the heater is saved.

Optionally, determining whether the heating demand of the energy storage battery is greater than the total heat generated by the DCDC and the charging cable according to the flow rate of the liquid coolant in the second liquid cooling pipeline includes: if the flow rate of the liquid coolant in the second liquid cooling pipeline reaches a preset flow rate threshold, determining whether the heating demand of the energy storage battery is greater than the total heat generated by the DCDC and the charging cable after flowing for a preset period according to the flow rate of the liquid coolant. In this way, whether the total heat generated by the DCDC and the charging cable can meet the heating demand of the energy storage battery can be determined according to the flow rate of the liquid coolant, thereby determining whether it is necessary to activate the heater to heat the energy storage battery.

Optionally, the integrated storage and charging device further includes a radiator, and the method further includes: when the energy storage battery and the bidirectional ACDC have heat dissipation demands, controlling the radiator to dissipate heat for the energy storage battery and the bidirectional ACDC; when the energy storage battery, the DCDC and the charging cable have heat dissipation demands, controlling the radiator to dissipate heat for the energy storage battery, the DCDC and the charging cable. In this way, when the energy storage battery and related components have heat dissipation demands, heat dissipation can be performed through the radiator, so that the energy storage battery and related components can operate at an appropriate temperature.

In a second aspect, an embodiment of the present disclosure provides a liquid-cooling temperature control system, which is characterized by being applicable to an integrated storage and charging device, where a bidirectional ACDC operates when an energy storage battery of the integrated storage and charging device is in a charging state, and a DCDC and a charging cable operate when the energy storage battery is in a discharging state. The system includes the following to mitigate energy waste: a charging temperature control module configured to control heat generated by the bidirectional ACDC to heat the energy storage battery if the energy storage battery is in the charging state when the energy storage battery has a heating demand; and a discharge temperature control module, configured to control heat generated by the DCDC and the charging cable to heat the energy storage battery if the energy storage battery is in the discharging state when the energy storage battery has the heating demand.

In a third aspect, an embodiment of the present disclosure provides an integrated storage and charging device, including: an energy storage battery; a bidirectional ACDC, which operates when the energy storage battery is in a charging state and does not operate when the energy storage battery is in a discharging state; a DCDC and a charging cable, which operate when the energy storage battery is in a discharging state. The bidirectional ACDC, the DCDC, the charging cable and the energy storage battery are connected through parallel liquid cooling pipelines. In this way, the integrated storage and charging device can adaptively adjust the operational statuses of the bidirectional ACDC, the DCDC and the charging cable according to the state of the energy storage battery, thereby implementing the charging function or discharging function of the energy storage battery.

Optionally, the integrated storage and charging device further includes a heater, configured to heat the energy storage battery in cooperation with the bidirectional ACDC or heat the energy storage battery in cooperation with the DCDC and the charging cable when the energy storage battery has a heating demand. In this way, when the heat generated by the bidirectional ACDC, or by the DCDC and the charging cable, can meet the heating demand of the energy storage battery, the heater may remain deactivated, thereby saving the energy for activating the heater. Furthermore, when the heat generated by the bidirectional ACDC, or by the DCDC and the charging cable, is insufficient to meet the heating demand of the energy storage battery, the heater is activated, so that the energy storage battery can operate at an appropriate temperature and the operational efficiency of the energy storage battery is improved.

Optionally, the integrated storage and charging device further includes a controller, configured to perform the method as described in the first aspect.

In a fourth aspect, an embodiment of the present disclosure provides a computer-readable storage medium having a computer program stored thereon. When the computer program is executed by a processor, the steps in the method provided in the first aspect above are performed.

In a fifth aspect, an embodiment of the present disclosure provides a computer program product, which includes a computer program or instructions, and when the computer program or instructions are executed by a processor, the method as described in the first aspect is performed.

The additional features and advantages of the present disclosure will be set forth in the subsequent description, and some will become apparent from the description, or may be appreciated through practice of embodiments of the present disclosure. The objectives and other advantages of the present disclosure can be achieved and obtained through the structures particularly pointed out in the written description, claims and accompanying drawings.

### Brief Description of Drawings

To explain the technical solutions of the embodiments of the present disclosure more clearly, the accompanying drawings will be briefly introduced. It should be understood that the drawings merely show some embodiments of the present disclosure, so they should not be regarded as limiting the scope. For a person of ordinary skill in the art, other related drawings may be obtained according to these drawings without inventive effort.
FIG. 1 is a flowchart of a liquid-cooling temperature control method provided in an embodiment of the present disclosure;
FIG. 2 is a schematic diagram of component connection of an integrated storage and charging device provided in an embodiment of the present disclosure; and
FIG. 3 is a structural block diagram of a liquid-cooling temperature control system provided in an embodiment of the present disclosure.

### Detailed Description of Embodiments

The technical solutions in the embodiments of the present disclosure will be clearly and completely described below with reference to the accompanying drawings. Obviously, the described embodiments are merely part of the embodiments of the present disclosure, but not all embodiments. The components of the embodiments of the present disclosure generally described and illustrated in the drawings herein may be arranged and designed in various different configurations. Therefore, the following detailed description of the embodiments of the present disclosure provided in the accompanying drawings is not intended to limit the scope of the claimed disclosure, but merely represents selected embodiments thereof. Based on the embodiments in the present disclosure, all other embodiments obtained by a person skilled in the art without inventive effort shall fall within the protection scope of the present disclosure.

It is to be noted that similar reference numerals and letters denote similar items in the following drawings. Thus, once an item is defined in one drawing, it requires no further definition or explanation in subsequent drawings. In addition, in the present disclosure, terms such as "first", "second", etc., are merely for distinguishing descriptions and should not be construed as indicating or implying relative importance.

It is to be noted that, where there is no conflict, the embodiments in the present disclosure or the technical features in the embodiments may be combined.

In related art, equipment installed with high-rate batteries has the problem of energy waste. To solve this problem, the present disclosure provides a liquid-cooling temperature control method, which can adaptively control the heat generated by relevant components, thereby mitigating energy waste.

The defects existing in the above solutions in related art are all results obtained by the inventor after practice and careful research. Therefore, the discovery process of the above problems and the solutions proposed by the following embodiments of the present disclosure for the above problems should be the contributions made by the inventor to the present disclosure.

It is to be noted that the integrated storage and charging device can adaptively control the operation of corresponding components according to different states of its energy storage battery. That is, when the energy storage battery is in a charging state, the bidirectional ACDC operates, while the DCDC and the charging cable do not operate; when in a discharging state, the DCDC and the charging cable operate, and the bidirectional ACDC does not operate.

It is to be noted that the bidirectional ACDC is a bidirectional AC-DC converter, which may be regarded as performing bidirectional AC-DC conversion operation when it is operating, and may be regarded as not performing bidirectional AC-DC conversion operation when it is not operating.

Similarly, when the DCDC and the charging cable are operating, they may also be regarded as performing corresponding operations; when they are not operating, they are regarded as not performing relevant operations. That is, the DCDC may be regarded as performing DC-to-DC operation when it is operating, and may be regarded as not performing DC-to-DC operation when it is not operating. The charging cable may be regarded as being used for discharge operation when it is operating, and may be regarded as not being used for discharge operation when it is not operating.

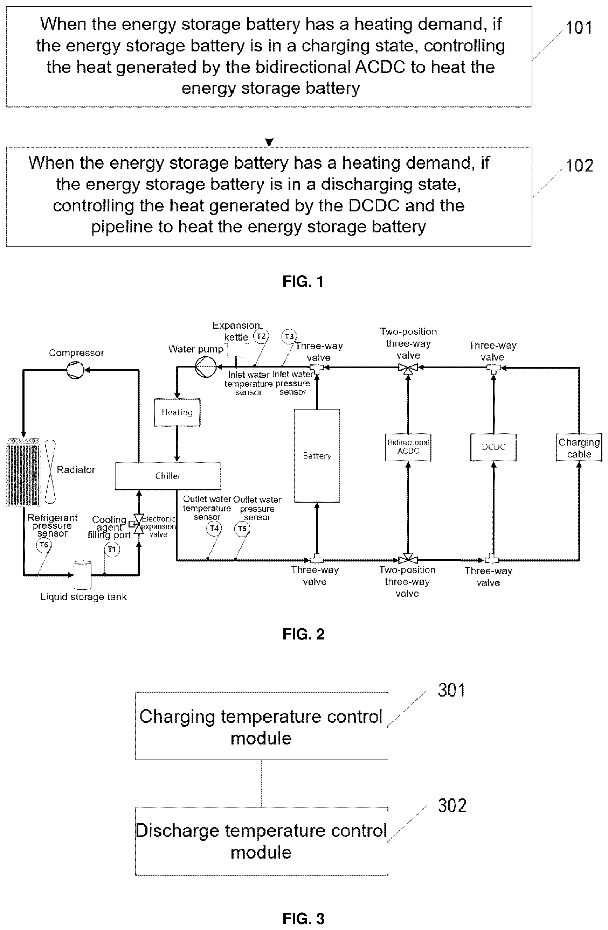

Please refer to FIG. 1, which shows a flowchart of a liquid-cooling temperature control method provided in an embodiment of the present disclosure. As shown in FIG. 1, the liquid-cooling temperature control method includes the following steps 101 to 102.

Step 101: when the energy storage battery has a heating demand, if the energy storage battery is in the charging state, controlling heat generated by the bidirectional ACDC to heat the energy storage battery.

In some application scenarios, if the energy storage battery is in a low-temperature situation, it has a heating demand. In these application scenarios, for example, temperature data of the energy storage battery or the environment where the energy storage battery is located may be acquired by a temperature sensor, and then the temperature data may be compared with preset low-temperature data. If the temperature data is less than the low-temperature data, it can be determined that the energy storage battery is in a low-temperature situation.

In these application scenarios, for example, the heat generated by the bidirectional ACDC may be controlled to heat the liquid coolant in the liquid cooling pipeline between the bidirectional ACDC and the energy storage battery, thereby heating the energy storage battery through the heated liquid coolant.

Step 102: when the energy storage battery has the heating demand, if the energy storage battery is in the discharging state, controlling heat generated by the DCDC and the charging cable to heat the energy storage battery.

In some application scenarios, for example, the heat generated by the DCDC and the charging cable may be used to heat the liquid coolant in the liquid cooling pipeline between the two and the energy storage battery, thereby heating the energy storage battery through the heated liquid coolant.

It is to be noted that in addition to using the heat generated by the DCDC and the charging cable together to heat the energy storage battery, the heat of only one of them may also be used to heat the energy storage battery.

In related art, due to the failure to reasonably utilize the heat generated by relevant components in the integrated storage and charging device, there is a problem of energy waste. Specifically, the equipment usually controls the heat of the bidirectional ACDC independently. In addition, since the DCDC and the charging cable are not directly connected to the energy storage battery, when the energy storage battery has a heating demand, the heat generated by the bidirectional ACDC, or by the DCDC and the charging cable during operation, cannot be used to heat the energy storage battery, thus wasting the heat generated by these components during operation.

In this implementation, when the energy storage battery has a heating demand, the heat generated by the bidirectional ACDC, or by the DCDC and the charging cable, may be adaptively used to heat the energy storage battery according to its different states. In this way, the heat generated by the bidirectional ACDC, the DCDC and the charging cable is reasonably utilized. In addition, due to the reasonable utilization of the heat generated by the bidirectional ACDC, the DCDC and the charging cable, there is no need to additionally use other heating components to provide heat for the energy storage battery, and no need to additionally use other heat dissipation components to dissipate heat for the bidirectional ACDC, the DCDC and the charging cable, thereby improving the situation of energy waste.

In addition, in related art, since equipment often generates noise during operation, in order to reduce adverse effects of noise, it is often necessary to place it away from crowds, thus limiting the application scenarios of the integrated storage and charging device.

In this implementation, since the heat generated by the bidirectional ACDC, the DCDC and the charging cable during operation is used to heat the energy storage battery, the operating duration of other heating components of the energy storage battery can be reduced. In addition, since there is no need to additionally dissipate heat for the bidirectional ACDC, the DCDC and the charging cable, the operating duration of other heat dissipation components is also reduced, thereby reducing the time of noise and reducing adverse effects of noise.

In some optional implementations, controlling the heat generated by the bidirectional ACDC to heat the energy storage battery in step 101 above includes the following sub-steps 1011 to 1014.

Sub-step 1011: controlling to establish communication of a first liquid cooling pipeline between the bidirectional ACDC and the energy storage battery, and disconnecting a second liquid cooling pipeline between the DCDC, the charging cable and the energy storage battery, thereby heating the energy storage battery through liquid coolant in the first liquid cooling pipeline.

In some application scenarios, for example, a two-position three-way valve may be used to connect the bidirectional ACDC to the energy storage battery, DCDC or charging cable respectively. In this way, the integrated storage and charging device can control the two-position three-way valve to communicate with the first liquid cooling pipeline and disconnect the second liquid cooling pipeline.

Sub-step 1012: determining whether a heating demand of the energy storage battery is greater than heat generated by the bidirectional ACDC according to a flow rate of the liquid coolant in the first liquid cooling pipeline.

In some application scenarios, the heating efficiency can be improved when the flow rate of the liquid coolant (unit: L/min) is high. Therefore, after determining that the energy storage battery is heated by the liquid coolant in the first liquid cooling pipeline, the integrated storage and charging device can determine whether the heating demand of the energy storage battery is greater than the heat generated by the bidirectional ACDC according to the flow rate of the liquid coolant, thereby avoiding the problem of overheating the energy storage battery.

In some optional implementations, sub-step 1012 may include: if the flow rate of the liquid coolant in the first liquid cooling pipeline reaches a preset flow rate threshold, determining whether the heating demand of the energy storage battery is greater than the heat generated by the bidirectional ACDC after flowing for a preset period according to the flow rate of the liquid coolant.

The above preset flow rate threshold may be, for example, the maximum flow rate of the liquid coolant or a value near the maximum flow rate of the liquid coolant.

The above heating demand may be determined, for example, by a temperature sensor arranged in the energy storage battery or the environment where the energy storage battery is located. That is, the integrated storage and charging device can acquire corresponding temperature data through the temperature sensor, and then can calculate a difference between the preset normal charging temperature of the energy storage battery and the temperature data to obtain the heating demand.

In some application scenarios, for example, a temperature sensor may be arranged between the energy storage battery and the heater to determine the heating demand of the energy storage battery through the temperature difference of the liquid coolant. The temperature sensors include an inlet water temperature sensor T2 in the water inlet direction from the energy storage battery to the heater, and an outlet water temperature sensor T4 in the water outlet direction from the heater to the energy storage battery.

In these application scenarios, for example, a pressure sensor may be arranged between the energy storage battery and the heater to determine the flow rate of the liquid coolant in the first liquid cooling pipeline through the pressure difference of the liquid coolant. The pressure sensors include an inlet water pressure sensor T3 in the water inlet direction from the energy storage battery to the heater, and an outlet water pressure sensor T5 in the water outlet direction from the heater to the energy storage battery.

Then, it can be determined whether the flow rate of the liquid coolant reaches the maximum flow rate of the liquid coolant. If it does not reach the maximum flow rate of the liquid coolant, the flow rate of the liquid coolant can be increased by means of pressurization (for example, pressurization by a water pump). If the maximum flow rate of the liquid coolant has been reached, it can be determined whether the heating demand of the energy storage battery is greater than the heat generated by the bidirectional ACDC after flowing for a preset period according to the maximum flow rate of the liquid coolant.

In this implementation, whether the heat generated by the bidirectional ACDC can meet the heating demand of the energy storage battery can be determined according to the flow rate of the liquid coolant, thereby determining whether it is necessary to activate the heater to heat the energy storage battery.

Sub-step 1013: if the heating demand of the energy storage battery is greater than the heat generated by the bidirectional ACDC, controlling a heater to heat, and controlling the heat generated by the bidirectional ACDC and heat generated by the heater to heat the energy storage battery.

That is, if the heating demand of the energy storage battery is greater than the heat generated by the bidirectional ACDC, it means that the heat generated by the bidirectional ACDC is insufficient to charge the energy storage battery at an appropriate temperature, so it is necessary to additionally activate the heater to improve charging efficiency.

Sub-step 1014: if the heating demand of the energy storage battery is not greater than the heat generated by the bidirectional ACDC, controlling the heater to stop heating, and controlling the heat generated by the bidirectional ACDC to heat the energy storage battery.

That is, if the heating demand of the energy storage battery is less than or equal to the heat generated by the bidirectional ACDC, it means that the heat generated by the bidirectional ACDC is sufficient to charge the energy storage battery at an appropriate temperature, so that the charging efficiency can be improved without additionally activating the heater.

In this implementation, whether to activate the heater can be determined according to the heating demand of the energy storage battery and the heat generated by the bidirectional ACDC, so that the energy storage battery can be charged at an appropriate temperature. Furthermore, the heater remains deactivated when the heat generated by the bidirectional ACDC can meet the heating demand of the energy storage battery, and is activated only when the heating demand of the energy storage battery is not met, thereby the relevant energy of the heater is saved.

Furthermore, the integrated storage and charging device may also judge in real time whether the heating demand of the energy storage battery is met. If not, the heat of the bidirectional ACDC may be continuously used to heat the energy storage battery; if yes, heat dissipation may be performed on the bidirectional ACDC. The specific heat dissipation process is described in detail later, and will not be repeated here.

In some optional implementations, controlling the heat generated by the DCDC and the charging cable to heat the energy storage battery in step 102 above includes the following sub-steps 1021 to 1024.

Sub-step 1021: controlling to establish communication of the second liquid cooling pipeline between the DCDC, the charging cable and the energy storage battery, and disconnecting the first liquid cooling pipeline between the bidirectional ACDC and the energy storage battery, thereby heating the energy storage battery through the liquid coolant in the second liquid cooling pipeline.

Sub-step 1022: determining whether the heating demand of the energy storage battery is greater than the total heat generated by the DCDC and the charging cable according to the flow rate of the liquid coolant in the second liquid cooling pipeline.

In some optional implementations, the sub-step 1022 may include: if the flow rate of the liquid coolant in the second liquid cooling pipeline reaches a preset flow rate threshold, determining whether the heating demand of the energy storage battery is greater than the total heat generated by the DCDC and the charging cable after flowing for a preset period according to the flow rate of the liquid coolant.

Sub-step 1023: if the heating demand of the energy storage battery is greater than the total heat generated by the DCDC and the charging cable, controlling a heater to heat, and controlling the total heat and the heat generated by the heater to heat the energy storage battery.

Sub-step 1024: if the heating demand of the energy storage battery is not greater than the total heat, controlling the heater to stop heating, and using the total heat to heat the energy storage battery.

It is to be noted that the implementation processes and technical effects of the above-mentioned sub-steps 1021 to 1024 are similar to those of the above-mentioned sub-steps 1011 to 1014, and will not be repeated here.

In some optional implementations, the integrated storage and charging device further includes a radiator, and the method further includes the following steps 103 and 104.

Step 103: when the energy storage battery and the bidirectional ACDC have heat dissipation demands, controlling the radiator to dissipate heat for the energy storage battery and the bidirectional ACDC.

In some application scenarios, the temperature of the energy storage battery will gradually rise after being charged for a period. When the temperature is higher than the preset temperature threshold, its charging efficiency may be reduced. Therefore, the energy storage battery has a heat dissipation demand. In addition, if the heat generated by the bidirectional ACDC cannot be used to heat the energy storage battery, heat dissipation for the bidirectional ACDC is also required. Therefore, when the temperature of the energy storage battery is higher than the preset temperature threshold, the energy storage battery and the bidirectional ACDC have heat dissipation demands.

At this point, the integrated storage and charging device can control the radiator to dissipate heat for the energy storage battery and the bidirectional ACDC.

In some application scenarios, the integrated storage and charging device may monitor the temperature difference between the temperature data acquired by the outlet water temperature sensor T4 and the inlet water temperature sensor T2 to control the radiator power to meet the heat dissipation demand. For example, if the temperature difference is greater than the preset temperature difference threshold, the radiator power may be increased to enhance heat dissipation; if the temperature difference is less than the preset temperature difference threshold, the radiator power may be reduced to reduce heat dissipation.

Furthermore, the integrated storage and charging device may monitor the pressure difference between the pressure data acquired by the outlet water pressure sensor T5 and the inlet water pressure sensor T3 to control the liquid coolant pressure, thereby controlling the liquid coolant flow rate. For example, if the pressure difference is less than the preset pressure difference threshold, the pressure may be increased to increase the liquid coolant flow rate and take away more heat; if the pressure difference is greater than the preset pressure difference threshold, the pressure may be reduced to decrease the liquid coolant flow rate and take away less heat.

Step 104: when the energy storage battery, the DCDC and the charging cable have heat dissipation demands, controlling the radiator to dissipate heat for the energy storage battery, the DCDC and the charging cable.

It is to be noted that the implementation process and technical effects of step 104 are similar to those of step 103, and will not be repeated here.

In this implementation, when the energy storage battery and related components have heat dissipation demands, heat dissipation may be performed through the radiator, so that the energy storage battery and related components can operate at an appropriate temperature.

It can be understood by a person skilled in the art that in the above method of specific embodiments, the writing sequence of each step does not mean a strict sequence of performance and does not constitute any limitation on the implementation process. The specific sequence of performance of each step should be determined according to its function and possible internal logic.

Please refer to FIG. 2, which shows a schematic diagram of component connection of an integrated storage and charging device provided in an embodiment of the present disclosure. As shown in FIG. 2, the integrated storage and charging device includes:
an energy storage battery, which may be a high-rate battery;
a bidirectional ACDC, which operates when the energy storage battery is in a charging state; and
a DCDC and a charging cable, which operate when the energy storage battery is in a discharging state; where
the bidirectional ACDC, the DCDC, the charging cable and the energy storage battery are connected through parallel liquid cooling pipelines.

It is to be noted that each of the bidirectional ACDC, the DCDC, and the charging cable may be one or more in number. If there are a plurality of components, these components may be connected in series or in parallel, and then connected in parallel with the energy storage battery through a liquid cooling pipeline. Specifically, if there are a plurality of bidirectional ACDCs, the plurality of bidirectional ACDCs may be connected in series or in parallel and then connected in parallel with the energy storage battery through a liquid cooling pipeline; if there are a plurality of DCDCs, the plurality of DCDCs may be connected in series or in parallel and then connected in parallel with the energy storage battery through a liquid cooling pipeline; if there are a plurality of charging cables, the plurality of charging cables may be connected in series or in parallel and then connected in parallel with the energy storage battery through a liquid cooling pipeline.

In addition, the integrated storage and charging device may further include a plurality of energy storage batteries, and the plurality of energy storage batteries may be connected in series.

In this implementation, the integrated storage and charging device may adaptively adjust the operational statuses of the bidirectional ACDC, the DCDC and the charging cable according to the state of the energy storage battery, thereby implementing the charging function or discharging function of the energy storage battery.

In some optional implementations, the integrated storage and charging device further includes a heater, configured to heat the energy storage battery in cooperation with the bidirectional ACDC or heat the energy storage battery in cooperation with the DCDC and the charging cable when the energy storage battery has a heating demand.

The above-mentioned heater may be connected in parallel with the energy storage battery for heating the energy storage battery by heating the liquid coolant in the liquid cooling pipeline between the heater and the energy storage battery.

At this point, if the energy storage battery is in a charging state, there is a heat dissipation demand when the bidirectional ACDC is operating, so the heat generated during its operation may be used to heat the energy storage battery.

Furthermore, if the heat generated by the bidirectional ACDC during operation is insufficient to meet the heating demand of the energy storage battery, the heater may be controlled to heat, so that the heater and the bidirectional ACDC can heat the energy storage battery together.

Similarly, if the energy storage battery is in a discharging state, the DCDC and the charging cable are operating, so both have heat dissipation demands, and thus the heat generated by both can be used to heat the energy storage battery.

Furthermore, if the heat generated by the DCDC and the charging cable during operation is insufficient to meet the heating demand of the energy storage battery, the heater may be controlled to heat, so that the heater, the DCDC and the charging cable can heat the energy storage battery together.

In this implementation, whether to activate the heater can be determined according to the operational statuses of the bidirectional ACDC, the DCDC and the charging cable. In this way, when the heat generated by the bidirectional ACDC, or by the DCDC and the charging cable, can meet the heating demand of the energy storage battery, the heater may remain deactivated, thereby saving the energy for activating the heater.

Furthermore, when the heat generated by the bidirectional ACDC, or by the DCDC and the charging cable, is insufficient to meet the heating demand of the energy storage battery, the heater is activated, so that the energy storage battery can operate at an appropriate temperature and the operational efficiency of the energy storage battery is improved.

In some optional implementations, the integrated storage and charging device further includes a controller, which is configured to perform the method in any previous implementation to achieve the corresponding control effect.

It is to be noted that the integrated storage and charging device further includes related components as shown in FIG. 2, such as a compressor, a water pump, an expansion kettle, a refrigerant pressure sensor T6, a liquid storage tank, a cooling agent filling port T1, an electronic expansion valve, etc. The functions and roles of each component are in the prior art and will not be described in detail in the present disclosure.

Please refer to FIG. 3, which shows a structural block diagram of a liquid-cooling temperature control system provided in an embodiment of the present disclosure. The liquid-cooling temperature control system may be a module, a program segment or codes on the integrated storage and charging device. It should be understood that this system corresponds to the above-mentioned method embodiment in FIG. 1 and can perform each step involved in the method embodiment in FIG. 1.

Optionally, the above-mentioned liquid-cooling temperature control system is being applicable to an integrated storage and charging device, where a bidirectional ACDC operates when an energy storage battery of the integrated storage and charging device is in a charging state, and a DCDC and a charging cable operate when the energy storage battery is in a discharging state. The system includes a charging temperature control module 301 and a discharge temperature control module 302. The charging temperature control module 301 is configured to control heat generated by the bidirectional ACDC to heat the energy storage battery if the energy storage battery is in the charging state when the energy storage battery has a heating demand. The discharge temperature control module 302 is configured to control heat generated by the DCDC and the charging cable to heat the energy storage battery if the energy storage battery is in the discharging state when the energy storage battery has the heating demand.

Optionally, the charging temperature control module 301 is further configured to: control to establish communication of a first liquid cooling pipeline between the bidirectional ACDC and the energy storage battery, and disconnect a second liquid cooling pipeline between the DCDC, the charging cable and the energy storage battery, thereby heating the energy storage battery through liquid coolant in the first liquid cooling pipeline; determine whether a heating demand of the energy storage battery is greater than heat generated by the bidirectional ACDC according to a flow rate of the liquid coolant in the first liquid cooling pipeline; if the heating demand of the energy storage battery is greater than the heat generated by the bidirectional ACDC, control a heater to heat, and control the heat generated by the bidirectional ACDC and heat generated by the heater to heat the energy storage battery; if the heating demand of the energy storage battery is not greater than the heat generated by the bidirectional ACDC, control the heater to stop heating, and control the heat generated by the bidirectional ACDC to heat the energy storage battery.

Optionally, the charging temperature control module 301 is further configured to: if the flow rate of the liquid coolant in the first liquid cooling pipeline reaches a preset flow rate threshold, determine whether the heating demand of the energy storage battery is greater than the heat generated by the bidirectional ACDC after flowing for a preset period according to the flow rate of the liquid coolant.

Optionally, the discharge temperature control module 302 is further configured to: control to establish communication of the second liquid cooling pipeline between the DCDC, the charging cable and the energy storage battery, and disconnect the first liquid cooling pipeline between the bidirectional ACDC and the energy storage battery, thereby heating the energy storage battery through the liquid coolant in the second liquid cooling pipeline; determine whether the heating demand of the energy storage battery is greater than the total heat generated by the DCDC and the charging cable according to the flow rate of the liquid coolant in the second liquid cooling pipeline; if the heating demand of the energy storage battery is greater than the total heat generated by the DCDC and the charging cable, control a heater to heat, and control the total heat and the heat generated by the heater to heat the energy storage battery; if the heating demand of the energy storage battery is not greater than the total heat, control the heater to stop heating, and use the total heat to heat the energy storage battery.

Optionally, the discharge temperature control module 302 is further configured to: if the flow rate of the liquid coolant in the second liquid cooling pipeline reaches a preset flow rate threshold, determine whether the heating demand of the energy storage battery is greater than the total heat generated by the DCDC and the charging cable after flowing for a preset period according to the flow rate of the liquid coolant.

Optionally, the integrated storage and charging device further includes a radiator, the system further includes a heat dissipation module, and the heat dissipation module is configured to: when the energy storage battery and the bidirectional ACDC have heat dissipation demands, control the radiator to dissipate heat for the energy storage battery and the bidirectional ACDC; when the energy storage battery, the DCDC and the charging cable have heat dissipation demands, control the radiator to dissipate heat for the energy storage battery, the DCDC and the charging cable.

It is to be noted that a person skilled in the art will appreciate that for convenience and conciseness of description, the specific operational processes of the system described above can be directly derived from corresponding processes in the aforementioned method embodiments, which are not redundantly described here.

An embodiment of the present disclosure further provides a computer-readable storage medium having a computer program stored thereon. When the computer program is executed by a processor, the method process performed by the integrated storage and charging device in the method embodiment shown in FIG. 1 can be performed.

An embodiment of the present disclosure further provides a computer program product, which includes a computer program stored on a non-transient computer-readable storage medium. The computer program includes program instructions. When the program instructions are executed by a computer, the computer can perform the methods provided in the above method embodiments. For example, the method may include: when the energy storage battery has a heating demand, if the energy storage battery is in the charging state, controlling heat generated by the bidirectional ACDC to heat the energy storage battery; when the energy storage battery has the heating demand, if the energy storage battery is in the discharging state, controlling heat generated by the DCDC and the charging cable to heat the energy storage battery.

In the embodiments provided in the present disclosure, it should be understood that the disclosed devices and methods may be implemented in other ways. The device embodiments described above are merely illustrative. For example, the division of the units is merely a division of logical functions, and there may be other division ways in actual implementation. For another example, a plurality of units or components may be combined or integrated into another system, or some features may be ignored or not implemented. Additionally, the mutual couplings, direct couplings or communication connections shown or discussed may be indirect couplings or communication connections through some communication interfaces, devices or units, and may be in electrical, mechanical or other forms.

In addition, the units described as separate components may or may not be physically separated, and the components displayed as units may or may not be physical units, that is, they may be located in one place or distributed to a plurality of network units. Part or all of the units may be selected according to actual needs to achieve the objectives of the solutions of the embodiments.

Furthermore, each functional module in each embodiment of the present disclosure may be integrated to form an independent part, or each module may exist independently, or two or more modules may be integrated to form an independent part.

Throughout this specification, relational terms such as first and second are used solely to distinguish one entity or operation from another entity or operation, and do not necessarily require or imply any such actual relationship or sequence between such entities or operations.

The above are merely illustrative embodiments of the present disclosure and are not intended to limit the protection scope of the present disclosure. For a person skilled in the art, the present disclosure may have various modifications and changes. Any modification, equivalent substitution, improvement, etc. made within the spirit and principles of the present disclosure shall fall within the protection scope of the present disclosure.

## Claims

1. A liquid-cooling temperature control method, **characterized by** being applicable to an integrated storage and charging device, wherein a bidirectional ACDC operates when an energy storage battery of the integrated storage and charging device is in a charging state, and a DCDC and a charging cable operate when the energy storage battery is in a discharging state, the method comprising:
when the energy storage battery has a heating demand, if the energy storage battery is in the charging state, controlling heat generated by the bidirectional ACDC to heat the energy storage battery;
when the energy storage battery has the heating demand, if the energy storage battery is in the discharging state, controlling heat generated by the DCDC and the charging cable to heat the energy storage battery.

2. The method according to claim 1, wherein the controlling heat generated by the bidirectional ACDC to heat the energy storage battery comprises:
controlling to establish communication of a first liquid cooling pipeline between the bidirectional ACDC and the energy storage battery, and
disconnecting a second liquid cooling pipeline between the DCDC, the charging cable and the energy storage battery, thereby heating the energy storage battery through liquid coolant in the first liquid cooling pipeline;
determining whether a heating demand of the energy storage battery is greater than the heat generated by the bidirectional ACDC according to a flow rate of the liquid coolant in the first liquid cooling pipeline;
if the heating demand of the energy storage battery is greater than the heat generated by the bidirectional ACDC, controlling a heater to heat, and
controlling the heat generated by the bidirectional ACDC and heat generated by the heater to heat the energy storage battery;
if the heating demand of the energy storage battery is not greater than the heat generated by the bidirectional ACDC, controlling the heater to stop heating, and controlling the heat generated by the bidirectional ACDC to heat the energy storage battery.

3. The method according to claim 2, wherein determining whether a heating demand of the energy storage battery is greater than heat generated by the bidirectional ACDC according to a flow rate of the liquid coolant in the first liquid cooling pipeline comprises:
if the flow rate of the liquid coolant in the first liquid cooling pipeline reaches a preset flow rate threshold, determining whether the heating demand of the energy storage battery is greater than the heat generated by the bidirectional ACDC after flowing for a preset period according to the flow rate of the liquid coolant.

4. The method according to any one of claims 1 to 3, wherein the controlling heat generated by the DCDC and the charging cable to heat the energy storage battery comprises:
controlling to establish communication of the second liquid cooling pipeline between the DCDC, the charging cable and the energy storage battery, and disconnecting the first liquid cooling pipeline between the bidirectional ACDC and the energy storage battery, thereby heating the energy storage battery through the liquid coolant in the second liquid cooling pipeline;
determining whether a heating demand of the energy storage battery is greater than a total heat generated by the DCDC and the charging cable according to a flow rate of the liquid coolant in the second liquid cooling pipeline;
if the heating demand of the energy storage battery is greater than the total heat generated by the DCDC and the charging cable, controlling a heater to heat, and controlling the total heat and the heat generated by the heater to heat the energy storage battery;
if the heating demand of the energy storage battery is not greater than the total heat, controlling the heater to stop heating, and using the total heat to heat the energy storage battery.

5. The method according to claim 4, wherein the determining whether a heating demand of the energy storage battery is greater than a total heat generated by the DCDC and the charging cable according to a flow rate of the liquid coolant in the second liquid cooling pipeline comprises:
if the flow rate of the liquid coolant in the second liquid cooling pipeline reaches a preset flow rate threshold, determining whether the heating demand of the energy storage battery is greater than the total heat generated by the DCDC and the charging cable after flowing for a preset period according to the flow rate of the liquid coolant.

6. The method according to any one of claims 1 to 3 and 5, wherein the integrated storage and charging device further comprises a radiator, the method further comprising:
when the energy storage battery and the bidirectional ACDC have heat dissipation demands, controlling the radiator to dissipate heat for the energy storage battery and the bidirectional ACDC;
when the energy storage battery, the DCDC and the charging cable have heat dissipation demands, controlling the radiator to dissipate heat for the energy storage battery, the DCDC and the charging cable.

7. A liquid-cooling temperature control system, **characterized by** being applicable to an integrated storage and charging device, wherein a bidirectional ACDC operates when an energy storage battery of the integrated storage and charging device is in a charging state, and a DCDC and a charging cable operate when the energy storage battery is in a discharging state, the system comprising:
a charging temperature control module (301), configured to control heat generated by the bidirectional ACDC to heat the energy storage battery if the energy storage battery is in the charging state when the energy storage battery has a heating demand; and
a discharge temperature control module (302), configured to control heat generated by the DCDC and the charging cable to heat the energy storage battery if the energy storage battery is in the discharging state when the energy storage battery has the heating demand.

8. The liquid-cooling temperature control system according to claim 7, wherein the charging temperature control module (301) is further configured to: control to establish communication of a first liquid cooling pipeline between the bidirectional ACDC and the energy storage battery, and disconnect a second liquid cooling pipeline between the DCDC, the charging cable and the energy storage battery, thereby heating the energy storage battery through liquid coolant in the first liquid cooling pipeline; determine whether a heating demand of the energy storage battery is greater than heat generated by the bidirectional ACDC according to a flow rate of the liquid coolant in the first liquid cooling pipeline; if the heating demand of the energy storage battery is greater than the heat generated by the bidirectional ACDC, control a heater to heat, and control the heat generated by the bidirectional ACDC and heat generated by the heater to heat the energy storage battery; if the heating demand of the energy storage battery is not greater than the heat generated by the bidirectional ACDC, control the heater to stop heating, and control the heat generated by the bidirectional ACDC to heat the energy storage battery.

9. The liquid-cooling temperature control system according to claim 8, wherein the charging temperature control module (301) is further configured to determine whether the heating demand of the energy storage battery is greater than the heat generated by the bidirectional ACDC after flowing for a preset period according to the flow rate of the liquid coolant if the flow rate of the liquid coolant in the first liquid cooling pipeline reaches a preset flow rate threshold.

10. The liquid-cooling temperature control system according to any one of claims 7 to 9, wherein the discharge temperature control module (302) is further configured to: control to establish communication of the second liquid cooling pipeline between the DCDC, the charging cable and the energy storage battery, and disconnect the first liquid cooling pipeline between the bidirectional ACDC and the energy storage battery, thereby heating the energy storage battery through liquid coolant in the second liquid cooling pipeline; determine whether the heating demand of the energy storage battery is greater than a total heat generated by the DCDC and the charging cable according to a flow rate of the liquid coolant in the second liquid cooling pipeline; if the heating demand of the energy storage battery is greater than the total heat generated by the DCDC and the charging cable, control a heater to heat, and control the total heat and the heat generated by the heater to heat the energy storage battery; if the heating demand of the energy storage battery is not greater than the total heat, control the heater to stop heating, and use the total heat to heat the energy storage battery.

11. An integrated storage and charging device, comprising:
an energy storage battery;
a bidirectional ACDC, wherein the bidirectional ACDC operates when the energy storage battery is in a charging state; and
a DCDC and a charging cable, wherein the DCDC and the charging cable operate when the energy storage battery is in a discharging state, wherein
the bidirectional ACDC, the DCDC, the charging cable and the energy storage battery are connected through parallel liquid cooling pipelines.

12. The integrated storage and charging device according to claim 11, further comprising:
a heater, configured to heat the energy storage battery in cooperation with the bidirectional ACDC or heat the energy storage battery in cooperation with the DCDC and the charging cable when the energy storage battery has a heating demand.

13. The integrated storage and charging device according to claim 11 or 12, further comprising:
a controller, configured to perform the method according to any one of claims 1 to 6.

14. A computer-readable storage medium, having a computer program stored thereon, wherein when the computer program is executed by a processor, the method according to any one of claims 1 to 6 is performed.

15. A computer program product, comprising a computer program or instructions, wherein when the computer program or instructions are executed by a processor, the method according to any one of claims 1 to 6 is performed.
